# EUROPEAN PATENT APPLICATION

(11) **EP 4 036 559 A1**
(43) Date of publication of application: **03.08.2022**
(21) Application number: 21154044.8
(22) Date of filing: 28.01.2021
(51) Int. Cl.: G01N 21/84, A01G 7/00, G01N 21/95

(54) **SYSTEM AND METHOD FOR DETECTION OF PLANTS AND SOIL PROPERTIES**

(71) Applicant: YARA International ASA, 0277 Oslo (NO)
(72) Inventor: PORTZ, Gustavo, 48249 Dülmen (DE)
(74) Representative: AWA Sweden AB

(57) **Abstract**

A system and method for a for determining an agricultural property of a sample, and a system and method using such a casing. The system comprises a casing comprising an upper cover adapted to receive an imaging device comprising a camera, wherein the upper cover comprises an opening to allow the camera to access an interior of the casing, a bottom plate having a surface facing the interior of the casing, which surface is provided with a pattern and an opening through which images of the sample are obtained, whereby the areas allow color calibration of an acquired image while the sample is secured to the bottom plate.

## Description

### Technical field

The present disclosure generally relates to the detection of plant and soil properties.

### Background of the invention

Nutrient deficiency, presence of pests and diseases in plants and adverse properties of soils can slow down growth or lead to stresses which ultimately leads to reduced yield and economic loss to farmers. Examples of nutrients required by plants are macronutrients, secondary nutrients and micronutrients, the macronutrients being consumed in larger quantities by the plants than the micronutrients. Examples of important macronutrients and micronutrients that are important for plant growth include nitrogen, phosphorus and potassium on one side, copper, manganese and iron, respectively.

Soil properties, e.g. salinity, soil type and granularity, pH and toxic elements present are as well decisive for the proper growth of a plant and for the determination of the proper dosage and rate of application of fertilizers, soil amendment products and other additives for the optimal growth of a plant.

Many types of nutrient deficiencies are first noticed by discolorations in the leaves. There are particular discolorations that are observed when a specific nutrient is absent or not on the required concentration levels (by excess or defect), and it is therefore possible to identify a particular deficiency by studying these discolorations. While existing solutions for detecting nutrient deficiencies in plants are available in lab procedures, they are often considered to be expensive, inadequate or too complicated for in-field use. There is thus a perceived need for new solutions which specifically consider the problem of small holders in low income countries.

Whereas farming companies in high income countries would usually have available several measurement devices of different price ranges and other remote sensing devices, a farmer in low income countries has no means for determining these crucial parameters on site. However, due to the widespread availability of mobile personal electronic devices with an imaging device (e.g. smartphones, PDAs, tablets), consumer cameras have seen increasing scientific use in recent years. Their low cost makes them ideal for projects involving large scale deployment, autonomous monitoring, or citizen science. It is an object of the invention to provide a device which improves usual consumer cameras for the determination of plants and soil properties, presence of pests and diseases in-site in a portable way.

### Summary of the invention

According to a first aspect of the present disclosure, this and other objectives are achieved by means of a system for determining an agricultural property of a sample, wherein the system comprises a casing, whereby the casing comprises an upper cover and a bottom plate defining an interior of the casing, wherein the upper cover comprises an opening adapted to receive a camera of an imaging device, wherein the bottom plate comprises a surface facing the interior of the casing and wherein the surface is provided with an opening and a region comprising a pattern; wherein the system is further configured to receive and secure a sample such that the sample is visible through the opening of the bottom plate and the opening of the upper cover such that the camera acquires an image of said sample, wherein the pattern is configured to allow color calibration of the acquired image, wherein the processing device is configured to determine an agricultural property of the sample based on the color calibrated image.

Following to this approach, the user can achieve an improved on-site picture having a controlled lighting environment which can be operated comfortably by the user.

According to one embodiment, the bottom plate is removably attachable to the upper cover and wherein the system comprises a plurality of interchangeable bottom plates configured to receive a sample comprising at least one of a plant leave, a chemical test strip, and a soil probe.

Following to this approach, the user will have at hand a plurality of bottom plates which are adapted to each of the samples, increasing the functionalities and versatility of the system.

According to a further embodiment, the upper cover is made of a diffusive and/or translucent material.

Following this approach, the lightning conditions are improved since no shadows from the user or nearby elements cast shadows on the sample which is to be analyzed, thereby improving the quality of the acquired image.

According to a further embodiment, wherein said pattern allows the determination of at least one of a given nutrient deficiency, a pH value, a soil color, granularity or salinity, organic matter and/or soil base level.

Following this approach, it is possible to determine different plant and soil properties.

According to a further embodiment, the system being configured to receive and secure the sample comprises the bottom plate comprising fastening means configured to bias the sample towards the bottom plate.

Following this approach, the user improves the quality of the obtained image by ensuring that the sample is biased against the bottom plate avoiding curved states of the samples.

According to a further embodiment, the system being configured to receive and secure the sample comprises the system comprising a clamping element configured to removably engage the upper cover with at least one of the bottom plate and the sample.

Following this approach, the user is able of securing and fastening the casing and the sample, achieving herewith a more secure operation which enables the user a more comfortable grip of the system.

According to a further embodiment, the clamping element further comprise a grip or handle zone.

Following this approach, the user is prevented from grabbing the system directly, which further improves the quality of the acquired image due to the avoidance of possible shades created by the user.

According to a further embodiment, the casing is made of a flexible material such that the casing is foldable into more compact or a substantially flat state and wherein the upper cover is adjustable to accommodate the camera of the imaging device.

Following this approach, the system can be stored and transported and due to the adjustable upper cover different models of imaging devices are suitable for the casing, which increases the reach and improves logistics and commercialization.

According to a further embodiment, there are a plurality of bottom plates suitable for use with the system.

Following this approach, the user can have at hand the different bottom plates which provide an adapted solution for each sample type.

According to a further embodiment, a corresponding method of determining an agricultural property of a sample, using a system according to any of the previous embodiments comprises the steps of receiving an image of the sample acquired by an imaging device positioned on the opening of the casing, the sample being secured onto a bottom plate secured to the upper cover, wherein the method further comprises using the pattern to color calibrate the acquired image and determining said agricultural property by processing the color calibrated image.

According to a further embodiment, the processing of the color calibrated image is adapted according to the sample type.

Following this approach, a more accurate determination of the properties of each type of the samples available is possible.

According to a further embodiment, the processing device is configured to provide an agricultural practice recommendation.

Following this approach, the user is provided with an action plant to be taken based on the determined sample properties.

Further embodiments are present concerning a data processing apparatus, computer-readable storage medium and a computer program product configured to carry out the methods disclosed.

### Brief description of the drawings

The accompanying drawings, which are included to provide a further understanding of the invention and are incorporated in and constitute a part of this specification, illustrate embodiments of the invention and together with the description serve to explain the principles of the invention.
Figure 1 shows a general view of the system according to one of its intended uses.
Figures 2A, 2B, 2C and 2D show respectively a casing according to one embodiment of the current application and three different bottom plates according to the different embodiments.
Figures 3A, 3B and 3C show several arrangements related to the different embodiments for the clamping element of the current application.
Figure 4 shows the flowchart representation of the method of the current application.

The accompanying drawings are used to help easily understand the technical idea of the present disclosure and it should be understood that the idea of the present disclosure is not limited by the accompanying drawings. The idea of the present disclosure should be construed to extend to any alterations, equivalents and substitutes besides the accompanying drawings.

### Detailed description

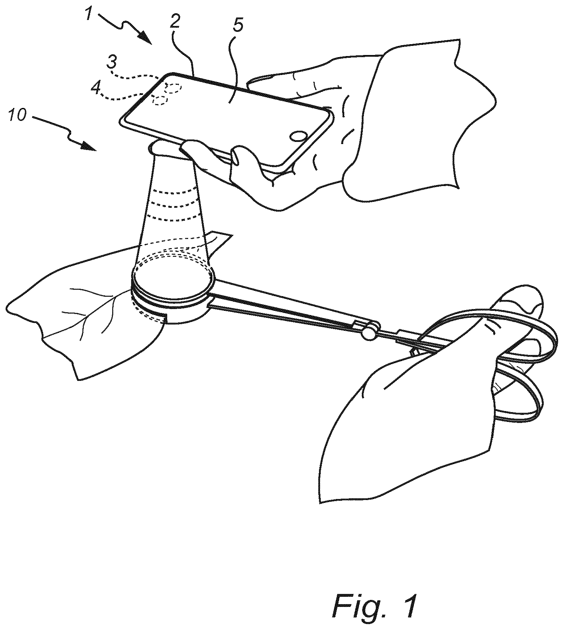

Figure 1 shows a general view a system 1 for determining an agricultural property of a sample 100 in use. The system 1 comprises an imaging device 2 comprising a camera 3 and, optionally, a light source (flash) 4. The imaging device 2 is here a conventional mobile phone with an integrated camera and flash.

In Figure 1, the camera 3 and the flash 4 are located next to each other on the (back) side of the imaging device 2 facing downwards. In a different embodiment according to the present disclosure, the imaging device 2 may be of a different type, such as a camera which does not have a flash and/or is not integrated with a mobile phone. The imaging device 2 here also comprises a screen 5. A user can see the images acquired by the imaging device 2 as well as other pieces of information on the screen 5. The imaging device 2 is in this case configured for wireless communication with remote devices. Specifically, the imaging device 2 is in this case capable of sending and receiving Wi-Fi signals and mobile network signals, such as GSM signals and LTE signals.

The system 1 comprises a casing 10. The casing 10 comprises in this case a frustrum shaped upper cover 6 but may have a different shape in a different example. More specifically, the casing 10 has a side wall formed by the upper cover 6 and an opening 8. The opening 8 is adapted to receive the imaging device 2 and is here essentially flat.

The casing further comprises a bottom plate 12. The bottom plate 12 is in this case circular but may have a different shape in a different example, according to the shape of the upper cover. During use of the system 1, the bottom plate 12, together with the upper cover 6 and the opening 8, when covered, defines a space which constitutes the interior of the casing 10.

The casing 10 is provided with an opening 8 for allowing the camera 3 and optionally the flash 4 to view inside the casing 10 when the imaging device 2 is arranged on the casing.

When the upper cover comprises such a frustrum shape, the user can adapt said upper cover by an appropriate removal of at least a part of the upper cover from above, allowing the upper cover to have a wider opening 8 which enables the current system to be suitable for different models of imaging devices. Although the figures depict the user placing the imaging device in contact with the opening of the upper cover, the current system is as well configured to allow the user to place the imaging device slightly over the opening 8.

The casing 10 may also comprise a light diffuser when a light source is also provided. Said diffuser is arranged to diffuse light emitted by the flash 4 when the imaging device 2 is placed on the opening 8. The light diffuser can for example be a thin sheet of paper, plastic or glass. Such a diffuser can be relatively inexpensive to manufacture and easy to configure such that the light diffuser covers a part of the opening 8, which is aligned with the location of the flash, while the camera 3 is aligned with the part of the opening 8 where the light diffuser is not located. Thus, the camera 3 has direct line of sight into the casing. The light diffuser 11 can be manufactured of an elastic element so that it fits the different opening sizes which are envisaged in order to accommodate different models of imaging devices.

Due to the constructional arrangements of the casing, it is ensured that an imaging device place on or above opening 8 can have direct view of the interior of the casing, and through it, of the opening 16 allowing an image of the sample to be obtained.

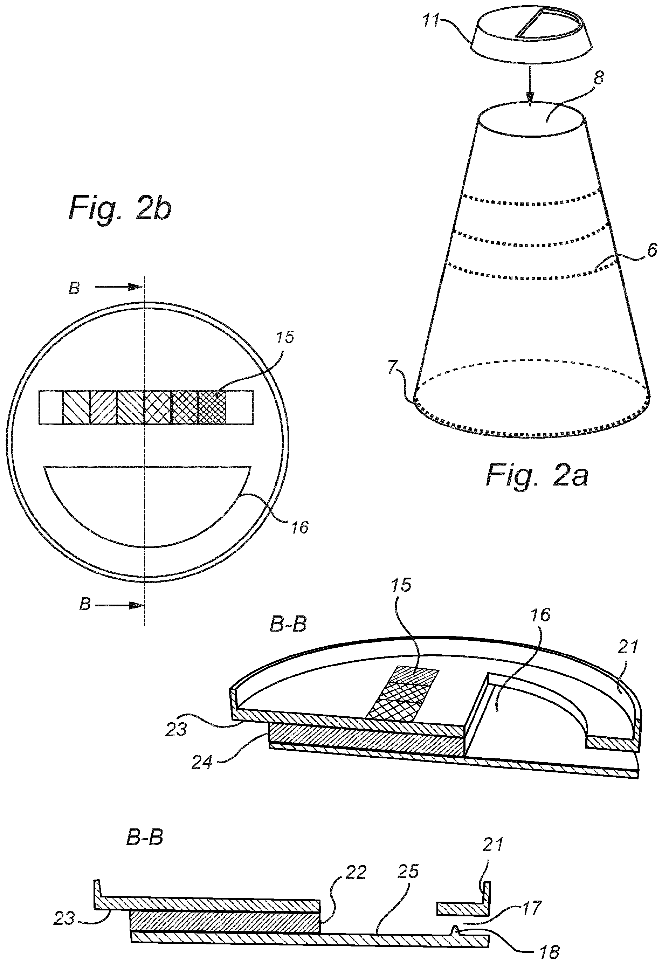

Figure 2A provides a side view of one embodiment of the current disclosure's upper cover. The upper cover 6 may provide guides for the user to selectively adjust, by means of cutting and/or folding, the upper cover 6 such that the different imaging devices 2 fit seamlessly, providing the necessary opening width to avoid irregularities, while ensuring enough focal length guaranteeing a quality picture of the sample due to the constructional constraints. As it is to be seen, light diffuser 11 is depicted in this figure as an elastic ring which surrounds the top of the casing, while a further piece covers partially the opening 8. Due to the wide variability present in the arrangements of the camera and flash in the imaging device and smartphones market, such a construction enables that several models can be used with the casing of the present disclosure and that the cameras of the different imaging device can use a the flash if needed due to low environmental light conditions.

In an embodiment, upper cover 6 may provide as fastening means for the removable bottom plate a grooved border 7, similar to a burr, similar as well to the arrangement in disposable cardboard coffee cups. In this embodiment, a secure fastening of the bottom plate to the upper cover is achieved. However, different fastening means can be envisaged which provide a secure fastening of the bottom plate like an elastic tapered ending protruding from the upper side wall of the bottom plate or the use of a separate clamping element as it will be described below.

In Figures 2B to 2D, several of the embodiments for the bottom plate 12 are to be seen. The different types of removable bottom plate 12 have a surface 13 facing the interior of the casing 6. Said surface 13 is provided with a region comprising a pattern 15 and an opening 16 to allow the sample to be seen from the interior of the casing and these features are common to all different types of bottom plate 12. The pattern 15 may comprise different features which allow the calibration of color, like areas having a predefined color, a leaf color chart, a Munsell-color chart, an RGB color chart or the like, each adapted to each kind of sample 100. The pattern 15 may comprise further fiducial markers which provide further information related to the bottom plate type. The processing device 14 is configured to determine, based on the pattern 15, the color calibration of the acquired image 200. The processing device 14 may be configured to achieve the color calibration of the acquired image 200 in order to define the true color of the sample either by means of direct comparison with the pattern, or by comparison of the intensity values generated by the imaging device 2 for the different pattern elements, thereby achieving the color calibration of the acquired image 200.

Figure 2B shows a view from above and two different cross-sections of an embodiment of the bottom plate 12 configured for the sample 100 being a leaf. In a further embodiment for said bottom plate 12, the system being configured to receive and secure the sample comprises the bottom plate comprising fastening means. In this embodiment said means are embodied by a lid or covering element 25, attached to the lower surface of the bottom plate, made of an elastic material and configured to bias the sample against the bottom plate. The lid or cover can be designed to allow the insertion of the sample by means of a slit shaped opening 17, wherein the opening can be configured such that the side walls 22 and 24 connecting and biasing the lid towards the bottom plate extend to substantially half of the circumference, providing herewith a guide for the sample to be suitably located within the opening. Further elements like guides or sliding latches can be envisaged in order to provide a quick and releasable insertion and securing of the sample. Other possible embodiments for the system to receive and secure the sample will become clear below, when disclosed in combination with other embodiments comprising the lid or covering element 25 or the clamping element 30.

The lid or covering element may further comprise grooves or ridges 18 as fastening means which are configured to bias the sample against the bottom plate. In case of the sample being a leaf, these grooves or ridges are arranged along the opening 17 and bias the leaf while the side wall 22 of the bottom plate guides the sample 100, as it is to be seen in Figure 2B.

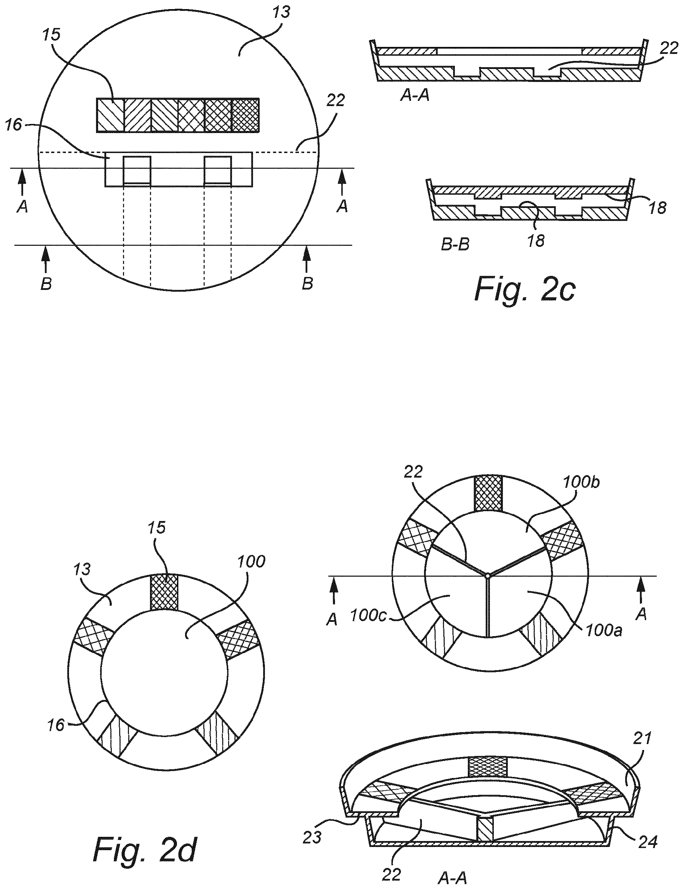

Figure 2C shows and embodiment of a bottom plate 12 configured for the samples 100 being chemical test strips according to a top view and two different cross sections following the indicated lines. When the sample to be analyzed is a chemical test strip, grooves or ridges 18 are arranged parallel to the insertion direction of the test strips and are configured to receive and guide the chemical test strips, as well as securing them. In this embodiment, either the bottom plate or as well the clamping element as it will be made clear below, or the lid or cover element are configured to guide the insertion and location of the chemical test strips by means of grooves or ridges 18 located on the lower surface of the bottom plate or on the upper surface of the lid or cover element. Further side wall of the bottom plate provides a stopper for the chemical test strips, as it is to be seen in Figure 2C. When intending to determine a soil pH, a soil salinity or a soil base level, being the sample a chemical test strip, the bottom plate 12 comprises a pattern 15 may be provided with areas having a predefined range of colors suitable for each of said intended values. Paper strips are commonly produced nowadays for a broad range of parameters (pH, Na, CI, Al, Ca, Mg, ...) and are usually of a smaller size than mature plant leaves. As such, the fastening means will secure said at least one paper strip (due to the smaller size compared to the leaf more paper strips related to different locations or elements can be analyzed at once) to the bottom plate and help providing guidance to the user for a correct introduction of the paper strips by means of grooves 18 and side wall 22.

Figure 2D shows different embodiments of a bottom plate 12 in which the sample is intended to be a soil sample, being depicted two top views of different embodiments of the bottom plate and a perspective view. As it is to be seen, bottom plate 12 is shown configured to form a petri plate containing the sample. In a further embodiment, the bottom plate is adapted to adaptively fit a petri plate onto sidewall 24. As it can be seen in Figure 2D, the bottom plate adapted to hold the soil sample 100 is configured to avoid the entrance of light into the interior of the casing, i.e. the walls 23 and 24 and bottom of the sample containing element are made of an opaque material. Further, the bottom plate adapted for soil samples is configured such that it is suited to the clamping elements of the previous embodiments. In this embodiment, the pattern 15 is arranged around the wider and bigger circular opening 16.

As it is to be seen, side walls 23 and/or 24 are configured to receive and secure the sample. In the embodiment shown in Figure 2D, the bottom plate may as well be configured to hold a plurality of soil samples 100a, 100b and 100c. This embodiment is of advantage when analyzing soils since the determination of soil properties (color and granularity, e.g.) is strongly related to the soil moisture levels. Usually, a soil sample may be prepared or pretreated in order to be analyzed (farmer would remove pieces of present organic matter or rocks, humidify the sample and/or compacted). This procedure can however, either help the standardization of samples or through a faulty procedure worsen the quality of said samples. Hence, a determination method which can decrease such an influence is envisaged. As such, in this embodiment, the farmer can provide different samples of the soil (e.g. collected at different depth levels, containing different moisture levels or treated with specific reactant/agents). By providing a soil sample from the same location in different conditions, or from different locations in an equivalent condition, the method of the current disclosure achieves a higher accuracy in determining the soil properties when compared to the pattern 15 provided on the surface 13. In this case, the opening present in the bottom plate is configured to at least partially overlap with the plurality of samples present and the pattern 15 provided on the surface is arranged accordingly around the opening. In a further embodiment, this effect is achieved by means of a circular opening, being the soil samples arranged in circular sectors, and wherein the pattern 15 is arranged partially or in its entirety surrounding the circular opening (as the markings in a clock face). When intending to determine a soil color, being the sample a soil probe, the bottom plate comprises a pattern 15 on the upper surface which allows the determination of a soil according to a Munsell color chart. Further, in this case, more parameters are derivable from the soil sample due to the granularity of the soil probe. Further parameters like soil organic matter content, iron content, clay/sand/silt content, water saturation (soil oxidation or reduction status) can be determined.

Further in this embodiment, the upper and the lower part of the bottom plate 12 can be made detachable in order to ease the collection of samples without causing any degradation of the pattern 15. For example, side wall 24 may comprise a thread which is configured to engage a corresponding threaded protrusion extending from side wall 23. However, said attachment means are not limited to the current example and other attachment means could be envisaged.

The lid or cover may be made of an opaque material and is configured to avoid the ambient light from impinging on the lower surface of the sample and the bottom plate. May the user not grab the system from below and its hand not provide light shielding, the system further provides a light shielding which improves the quality of the acquired image. Further embodiments are envisaged regarding the system being configured to receive and secure the sample.

As shown in the figures, in various embodiments of the present disclosure, the bottom plate is removable. The farmer (or user in general) will have at hand different bottom plates 12 depending on the sample and the property which is intended to be measured. In an embodiment, the pattern 15 provided on the upper surface of the bottom plate comprises further indices or fiducial markers which indicate to the processing device 14 which type of sample 100 is intended to analyze.

When intending to determine the nutrient deficiency of a plant or analyze certain color patterns present in the leaves, the user can for example take a non-invasive picture of a portion of a leaf without the need of removing the leaf from the plant. In order to correctly assess the color of the plant leaf, the pattern 15 may be provided with areas having a predefined color comprises a range of different shades of green or a color chart as explained above. In order to allow the user to correctly place the leave onto the bottom plate or between the bottom plate and the casing, the fastening means will secure said leaf, thereby allowing the user to have a comfortable grip of both the imaging device and the casing, ensuring a comfortable operation and a more reliable estimation.

In a further embodiment, the bottom plate may comprise side walls 23 and 24 configured to receive a clamping element configured to secure the sample to the bottom plate and to block any further incoming light from below the sample to avoid light transmittance through it. In an embodiment, the bottom plate may further comprise a further upward extending side wall 21 configured to secure the bottom plate to the upper cover 6. In said embodiment, the further upward extending wall may be made of an elastoplastic material which contributes to securing the bottom plate to the upper cover 6.

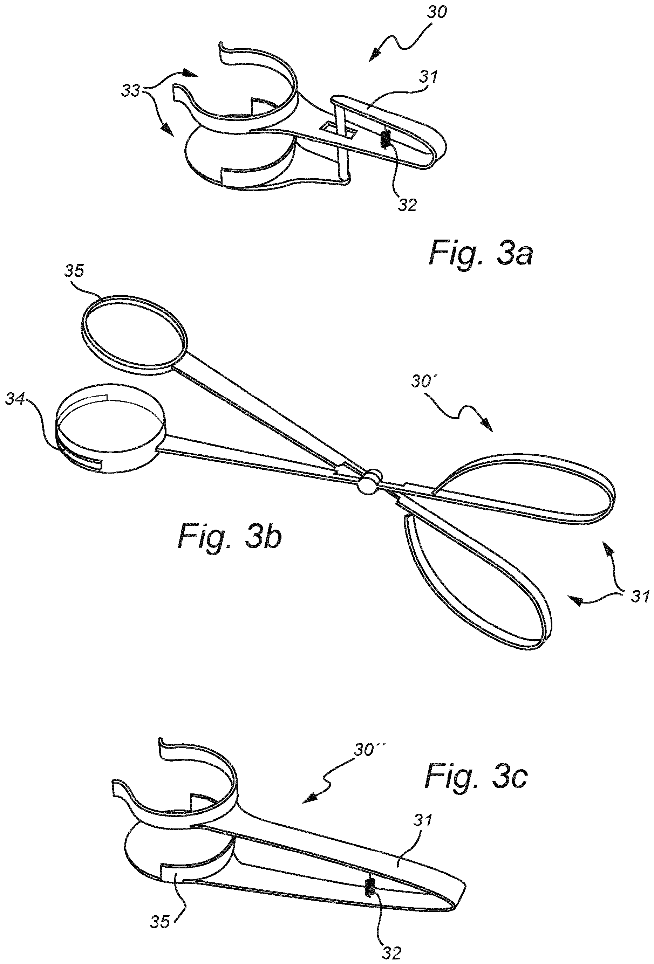

The system 1 being configured to receive and secure may in this case be a clamping element 30 comprising a bar, spring, ratchet, spreader or a clip type clamp configured to receive and secure the sample and the bottom plate. Some of these embodiments have been depicted in Figures 3A, 3B and 3C. The clamping element 30 may comprise a handle or grip zone 31 configured to fasten the clamp and fix the sample when the user presses or activates the handle, while providing a grip area for the user. Different arrangements are envisaged to achieve such a handle and can be made in the form of a positively actuated clamp or in a scissors form 30'. The clamping element may be as well of the press and release form 30 to allow the user to leave the sample and bottom plate fixedly secure, as it is to be seen in Figure 3A. The clamping element is adapted to receive the different types of bottom plates present. In the following paragraphs, the main features of a clamping element according to one of the embodiments of the current disclosure will be described.

In the embodiment described in Figure 3A, the clamping element is provided with two extending arms 33 which are configured to grip the upper cover on one of the arms and the bottom plate and/or sample on the other end. On or both of the arms 33 may comprise an ending configured as two extending arms which are configured to the shape of the upper cover and therefore help the user to grip the casing. In this embodiment, the extending circular shaped arms may be made of metal or plastic. In this embodiment a quick release of the casing is provided for the user. In another embodiment, the end configured to grip the casing may be configured as an elastic ring 35 of an appropriate diameter so that the casing is completely surrounded by the ring as shown in Figure 3B.

The end configured to grip the sample 100 and/or bottom plate 12 may comprise equivalent endings adapted to the different shapes of the bottom plate. Regarding the bottom plate as depicted in Figure 3B and 3C, a fitting clamping element 30 may comprise an elastic ring or extending arms, as described for the other end, configured to engage side wall 24 and abut against side wall 23 to press the bottom plate against the cover. In this embodiment, burr 7 would not be needed but can be incorporated for further stability of the device. In this embodiment, a bottom surface of approximately the same shape and size as the bottom plate may extend from the lower side of the ring/arms to secure the sample against the bottom plate and provide the needed light shield.

The clamping element may be further configured to allow the insertion of a sample. In an embodiment, the sample insertion is enabled by reducing the length of the extending arms. In this case the extending arms do not extend more than substantially half of the circumference. In another embodiment, when a fully enclosing ring for better stability of the sample is considered (for the soil sampling, e.g.), a slit-shaped incision 34 is envisaged in the enclosing ring so that a sheet-like samples (may it be a leaf or a chemical test) can be as well slidably introduced in between the bottom plate and the bottom surface of the clamping element. The slit is configured to extend substantially over half of the circumference. In both cases, ensuring that the incision or opening does not extend more than substantially the half of the circumference improves the guiding of the sample such that the clamping element is configured to correctly position the sample below the opening.

Regarding the handle portion, the clamping element might be made of a push to release type with a single handle element or might be made of a push to lock type (similar to the movement for actuation of scissors). Biasing means 32 are envisaged to hold the casing, and bottom plate and sample(s) in the secured position. The biasing means may comprise a spring biasing the supporting ends towards each other, or a locking or latching device which fastens the clamping element in the engaging position. The handle may comprise a designated area for the user to hold the clamping element, avoiding thereby that the user's hand comes into contact with the upper cover, what could cast shades on the bottom plate and herewith challenge the image acquisition.

In a further embodiment, the entire casing is foldable or collapsible, which allows an easy storage and shipping. In a further embodiment, the casing 6 may be made from a translucent or diffusive material, to ensure that ambient light is evenly distributed in the inside and does not affect the readings due to shadings or irregularities. When the casing is made of a translucent or diffusive material, the current disclosure further presents the advantage that no light source needs be provided for the determining the parameters. Thanks to the ambient light introduced through the casing into the inside, the electronic device is able of acquiring the colors of the sample 100 and the pattern 15, establishing an RGB relation which is independent of the ambient light and the casted shadows. Shades or different illumination intensity levels which could have been caused by clouds, trees or nearby objects, are eliminated, improving the recognition of the parameters to be determined. The casing may be made in this embodiment of cardboard, a plastic material, or any other suitable material.

The system further comprises a processing device 14 which is configured to determine nutrient deficiencies or other properties in a leaf 100 or further properties of another type of sample based on an image thereof acquired by the imaging device 2. The processing device 14 can in this case be arranged remotely to the casing 6 and the imaging device 2. The processing device 14 and the imaging device 2 are capable of communicating wirelessly with each other over some type of network, such as a Wi-Fi network, a mobile network, or a combination of different types of networks. Examples of mobile networks which the processing device 14 may be configured to use comprise GSM networks and LTE networks. It is noted that, in a different example, the processing device 14 may be integrated with the imaging device 2. It may, for example, be the processor of a mobile phone.

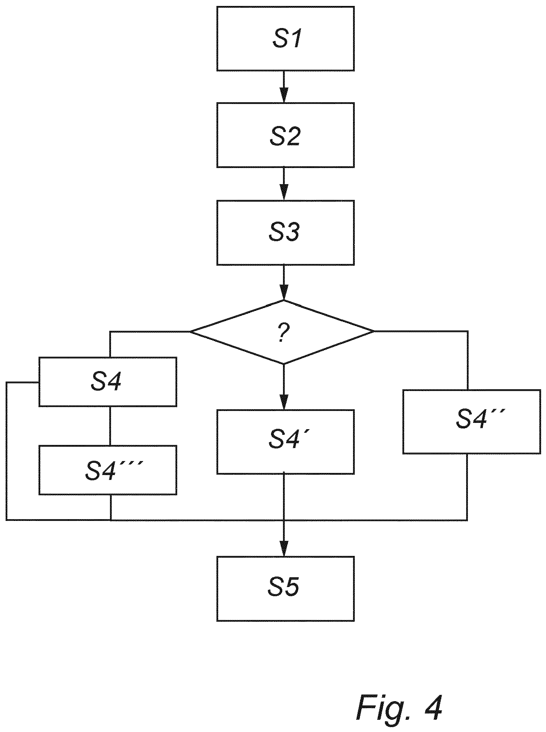

With reference to Figures 4, a method for determining an agronomic property of a sample 100 will now be described. In this case, the method is performed using the system 1 described above, and continued reference will therefore be made to Figure 1.

At step S1, the user selects the appropriate bottom plate for the kind of sample which is going to be analyzed as discussed above.

At step S2, the user, places and secures the sample onto the bottom plate. Thereby, the sample 100 is fixed in relation with respect to the pattern 15 provided on the bottom plate upper surface.

At step S3, the imaging device 2 acquires an image 200 of the sample 100 placed visibly with respect to the pattern 15 on the surface 13. The image 200 of the sample 100 acquired by the imaging device 2 may be received e.g. by the processing device 14. The image 200 is acquired using the camera 3 and optionally the light source (flash) 4 and following it the pattern 15 on the surface 13 is used to calibrate the color of the acquired image.

In step S4, the color calibrated image (200) is processed to determine the agricultural property. In this sense, processing may comprise several different procedures known in the state of the art for image processing like filtering, thresholding, cropping and determination of regions of interest, edge finding, marking and color comparison which need not be further described herein.

In the case in which the sample to be analyzed is a leaf, in step S4 the processing device 14 analyzes the image 200 to see whether or not the leaf 100 suffers from nitrogen deficiency. The leaves of a plant that does not receive enough nitrogen turn yellow. The greater the nitrogen deficiency, the more yellow the leaves turn. It is noted that, in a different example, the processing device 14 may check for some other type of nutrient deficiency or for more than one type of nutrient deficiency. The leaves of many plants have a rich green color when healthy. Discolored leaves may indicate that the plant is not receiving enough of one or more nutrients. For example, nitrogen deficiency is typically manifested by the leaf becoming less green and more yellow. Further, reddish-purple marks on the leaf may indicate a phosphor shortage, whitish stripes may indicate a magnesium deficiency, and a drought may cause the leaf to become grayish-green. It is noted that, since some type of diseases and chemicals cause discoloration in leaves, the system 1 may also be used to detect discolorations due to diseases and chemical exposure.

Further, step S4 comprises the processing device 14 defines the regions of interest of the image to be processed, whereby the pattern 15 provided is cropped as one of the regions of interest together with at least a further region of the sample. The processing device may determine as well by means of the pattern 15 or the opening shape and present elements which bottom plate is being used and which sample is being analyzed. As a further step, depending on the type of sample provided, the processing device 14 may be configured to crop further regions of interest which provide reliable readings. In a further embodiment, the whole opening might be designated as region of interest. In a further embodiment, a background subtraction can be effectuated to remove all the areas of the surface which are of a certain color.

In an embodiment where the sample to be analyzed is a leaf, further aspects have to be taken in consideration. In this embodiment, the processing device 14 is aware of the sample being a leaf and is configured to retrieve regions of interest automatically based on the pattern 15. The processing device 14 is in this case configured to extract an average R, G and B value for all the defined regions or interest, each of them associated with at least one location of the pattern 15 and of the sample. In view of the colors defined by the respective locations, the processing device 14 is configured to obtain the color differences between the sample and the different areas of the pattern 15, whereby a determination of a corresponding R, G and B calibrated value of the sample is obtained which can be used for the determination of an agricultural property. In this case, based on the color of a leaf, the processing device 14 may be further configured to provide an agricultural practice recommendation like a product application regarding a fertilizer or pesticide recommendation.

In this processing step, further sub steps for analyzing the image can be envisaged, like color space transformations, optimization methods for determination of the optimally calibrated values and other pre-processing algorithms like smoothing and other appropriate filtering processes. Further, the regions of interest, although usually referred to as rectangular regions due to the pixel geometries, may be as well of a round or elliptical nature or of a regular geometric shape configured to enclose the regions of interest as defined by the processing device 14.

When analyzing a leaf, due to the constructional arrangements of the bottom plate, the leaf is usually inserted sideways such that only a part of the cross section of the leaf is visible through the opening, as depicted in Figure 1. In a further embodiment, and due to the different morphology present in leaves of different plant types, a further approach is envisaged which can reliably define suitable regions of interest and address the specific constraints as posed by the current problem.

In this embodiment, the processing device 14 is configured to determine a region related to the midvein, may it be visible through the opening. Midveins in plant leaves usually have a different color from the lamina which cannot be used for the determination of nutrients and therefore excluding it from being a designated region of interest is advantageous for the determination. In a further embodiment, the processing device 14 may define a plurality of regions of interest, whereby at least two of them have their main axis defined to be substantially perpendicular to each other. Through this suitable determination, the processing device 14 can analyze said regions along a respective detection line defined by the main axis of each region of interest, which determine two perpendicular directions within the leaf such that a continuous evaluation of the color can be determined along those lines, thereby allowing a determination which takes into consideration the orientation of the leaf.

In a further embodiment, if the midvein is visible through the opening, this further helps the processing device 14 to determine an orientation of the leaf and determine a suitable region of interest. In this embodiment, the processing device 14 is configured to in a further step rotate the main axis of the respective regions of interest according to the angle which the midvein forms with one of the sides of the opening so that the detection lines are defined along the perpendicular directions which are closer to the longitudinal and transversal axis of the leaf.

In a further step, upon definition of the detection lines generated from the different regions of interest, the processing device 14 is configured to measure the color of the pixels located along said detection lines. The processing device 14 is configured in this case to determine if the color along said lines, as defined with respect to the RGB values, is within a certain variability along both detection lines. If the leave has a gradient or variation of the color along said directions which is determined to be within a certain fixed threshold, the leaf is judged to be suitable for nitrogen content determination and a recommendation of nitrogen uptake can be effectuated. Such a procedure can however be carried out for generalized regions of interest with averaged R, G and B values, wherein the variability of said values is done regarding the respective region of interest.

If during the determination of the color along those lines there are zones of colors other than the normal leaf colors due to local discolorations, the processing device 14 is configured to consider the sample as not valid for nitrogen content determination and the user would be requested to sample another leaf. These local discolorations can happen due to the presence of pests or disease, or due to irregularities during the growth phases of the plant. Although this event can preclude the determination of nitrogen content of the leave, the processing device may be further configured to determine said discolorations as region of interest for determination of the lack of further nutrients, micro-nutrients, presence of pests or disease. In a further embodiment, the processing device 14 also uses a machine learning model and a library of discoloration trends when determining the nutrient deficiency.

In this further embodiment, where local discolorations are present, the processing device may be configured to process a further step S4'" to adapt the regions of interest of the leaf to a predetermined shape which surrounds said discolorations. While regular shaped regions of interest are preferred, due to the computational ease they allow, other shapes are as well envisaged. Through the determination of the best fitting region of interest, the processing device can already narrow down the probable causes and reduce the computational workload of the processing device for finding the probable causes of said discolorations.

Until now, S4 has been depicted regarding the embodiment present in Figure 1 where the analyzed sample 100 is a leaf. However, corresponding detection steps are envisaged for the determination of soil properties, wherein the user might only need to adapt the bottom plate to the corresponding sample, as shown in Figure 2D, wherein the processing device 14 is configured to automatically recognize the sample. As such, when the processing device 14 detects that the determination of soil properties is intended by attaching a bottom plate configured to hold one or more soil samples, the processing device automatically carries out step S4' which is configured to determine the properties of said soil sample. By means of an analogous process to the one described in S4 above, the processing device 14 may be configured to obtain an averaged calibrated RGB color value of the soil sample. According to the Munsell table, properties of the soil can be determined which can then be used to determine an agricultural property and a corresponding agricultural practice recommendation like a more accurate irrigation or nitrogen recommendation in step S5.

At step S4', the processing device 14 may be configured to determine, within the opening region where the soil sample or plurality of soil samples are arranged, corresponding regions of interests within each of the regions. That is, when a single soil sample is present, the processing device 14 is configured to determine a certain number of regions of interest distributed over the entirety of the opening. When there is a plurality of soil samples, the processing device 14 is configured to distribute a certain number of regions of interest within each of the regions containing the respective soil sample, wherein the regions or interest are defined according to the soil regions with a similar color and their size is adapted to surround said regions. Each of these regions of interests will then be analyzed and the size of each region determined. By determining the number of regions of a certain size and/or certain color which are distributed within each of the plurality of the regions, further soil properties can be determined which go over the usual information provided by a sorting according to Munsell soil color charts.

In an alternative step S4", wherein the sample to be analyzed is at least one chemical test strip for the determination of further properties of the soil. In this case, by means of an analogous process to the one described in S4 and S4' above, the processing device 14 can be configured to obtain an average calibrated R, G, B color value of the at least one chemical test strip by comparison with the pattern 15 provided on the bottom plate.

In a further embodiment, the processing device 14 is configured in S4" to define the regions of interest regarding the number of chemical test strips presents. When correctly located, the chemical test strips are located substantially parallel to each other and determining the regions of interest is made easy. Moreover, due to the arrangement of the pattern 15 and the test strips, an insertion direction can be determined which further improves the determination of the color of the chemical test strip. Chemical test strips do not usually present a uniform color over the whole colored location. The usual procedures letting the chemical test strip be in contact with a liquid (by dipping or dropping some drops on it) or having a certain contact with other solids that contain sufficient moisture to be absorbed by the chemical strip and start the chemical reaction (e.g. wet soil), generate color with characteristic gradients caused by friction, gravity on water or the water surface tension dynamics. By taking these gradients in consideration, further improved calibrated R, G, B values can be determined.

At a further step S5, the processing device 14 may determine a further agricultural practice recommendation for the one or more plants from which a leaf 100 was analyzed and/or for the plurality of plants located near where the soil properties have been sampled. The processing device 14 can in this case be configured to send the agricultural practice recommendation to the imaging device 2 and the imaging device 2 to display the received recommendation on the screen 5. The agricultural practice recommendations can comprise different actions like fertilization or fertigation, irrigation, tillage and so on.

It should be made clear that through an integral approach to determine several properties of the plant and nearby soils, the system of the current application is able of combining the determined agricultural properties to achieve a more accurate agricultural practice recommendation.

While the present invention has been illustrated by a description of various embodiments and while these embodiments have been described in considerable detail, it is not the intention of the applicant to restrict or in any way limit the scope of the appended claims to such detail. Additional advantages and modifications will readily appear to those skilled in the art. The invention in its broader aspects is therefore not limited to the specific details, representative apparatus and method, and illustrative example shown and described. Accordingly, departures may be made from such details without departing from the gist or scope of the applicant's general inventive concept. For example, the shape and design of the casing may be different than what has been disclosed herein, as long it provides the required function. The details in the analysis process, e.g. the selection and order of steps, may also be modified when implementing the invention.

### List of reference signs

- 1: System
- 2: Imaging device
- 3: Camera
- 4: Flash
- 5: Screen
- 6: Upper cover
- 7: Burr
- 8: Opening
- 10: Casing
- 11: Light diffuser
- 12: Bottom plate
- 13: Surface
- 14: Processing device
- 15: Pattern
- 16: Bottom plate opening
- 17: Slit-shaped opening
- 18: Grooves, ridges
- 21-24: Bottom plate side walls
- 25: Lid or cover
- 30: Clamping element
- 31: Handle or Grip zone
- 32: Biasing means
- 33, 35: Arms
- 34: Slit-shaped incision
- 100: Sample
- 200: Image

## Claims

1. A portable system (1) for determining an agricultural property of a sample (100), wherein the system (1) comprises:
a casing (10), whereby the casing comprises an upper cover (6) and a bottom plate (12) defining an interior of the casing,
wherein the upper cover (6) comprises an opening (8) adapted to receive a camera (3) of an imaging device (2),
wherein the bottom plate (12) comprises a surface (13) facing the interior of the casing and wherein the surface is provided with an opening (16) and a region comprising a pattern (15);
wherein the system (1) is further configured to receive and secure a sample (100) such that the sample (100) is visible through the opening (16) of the bottom plate (12) and the opening (8) of the upper cover (6) such that the camera acquires an image (200) of said sample (100), wherein the pattern is configured to allow color calibration of the acquired image (200);
a processing device (14), wherein the processing device (14) is configured to determine an agricultural property of the sample (100) based on the color calibrated image.

2. The system according to claim 1, wherein the bottom plate (12) is removably attachable to the upper cover (6), and wherein the system comprises a plurality of interchangeable bottom plates configured to receive a sample (100) comprising at least one of a plant leave, a chemical test strip, and a soil probe.

3. The system according to claim 1 or 2, wherein the upper cover (6) is made of a diffusive and/or translucent material.

4. The system according to any one of the preceding claims, wherein the agricultural property of the sample is at least one of a given nutrient deficiency, a pH value, a soil color, granularity or salinity, organic matter and/or soil base level.

5. The system according to any one of the preceding claims, wherein the system being configured to receive and secure the sample comprises the bottom plate (12) comprising fastening means configured to bias the sample (100) towards the bottom plate (12).

6. The system according to any one of the preceding claims, wherein the system being configured to receive and secure the sample comprises the system comprising a clamping element (30) configured to removably engage the upper cover with at least one of the bottom plate (12) and the sample (100).

7. The system according to claim 6, wherein the clamping element (30) further comprise a grip or handle zone (31).

8. The system (10) according to any one of claims 1 to 7, wherein the casing (10) is made of a flexible material such that the casing (10) is foldable into more compact or a substantially flat state and wherein the upper cover (6) is adjustable to accommodate the camera (3) of the imaging device (2).

9. A bottom plate (12) for use with a system according to any one of the claims 1 to 8, wherein the bottom plate comprises a surface (13) with a pattern (15) and an opening (16).

10. A method of determining an agricultural property of a sample (100), wherein the method uses a system (1) according to any one of the claims 1 to 8, and wherein the method comprises the following steps:
receiving an image (200) of the sample (100) acquired by an imaging device (2) positioned on the opening (8) of the casing (10), the sample being secured onto a bottom plate (12) secured to the upper cover (6);
using said pattern (15) to color calibrate the acquired image (S3); and
determining (S4) said agricultural property by processing the color calibrated image (200).

11. A method according to claim 10, wherein the processing of the color calibrated image is adapted according to the sample type.

12. A method according to claims 10 or 11, wherein in a further step the processing device provides an agricultural practice recommendation.

13. A method according to claims 10 to 12, wherein the processing device (14) is configured to carry out the calibration of the acquired image and the determination of said agricultural property, and wherein the processing device is integrated in the imaging device and/or remotely located.

14. A data processing apparatus comprising means for carrying out the method according to any one of claims 10 to 13.

15. A computer program product comprising instructions which, when executed by a processing device (14), cause the processing device to carry out the method according to any one of claims 10 to 13.
